# EUROPÄISCHE PATENTANMELDUNG

(11) **EP 1 186 741 A2**
(43) Veröffentlichungstag der Anmeldung: **13.03.2002**
(21) Anmeldenummer: 01120950.9
(22) Anmeldetag: 31.08.2001
(51) Int. Cl.: E06B 9/68, E06B 9/32

(54) **Steueranordnung eines AC-Jalousiemotors oder eines AC-Rohrmotors**

(30) Priorität: 06.09.2000 DE 10044029
(71) Anmelder: Josef Stehle + Söhne AG, 73773 Aichwald (DE)
(72) Erfinder: Kaak, Hartmut, 73035 Göppingen (DE)
(74) Vertreter: KOHLER SCHMID + PARTNER

(57) **Zusammenfassung**

Eine Steueranordnung (1) eines AC-Jalousiemotors oder eines AC-Rohrmotors (2) weist eine elektronische Endabschaltung auf. Eine Laufrichtung wird von außen vorgegeben, indem eine Wechselspannung entweder an eine erste Wicklung (3) des AC-Jalousiemotors oder des AC-Rohrmotors (2) über eine erste Leitung (8) oder an eine zweite Wicklung (4) des AC-Jalousiemotors oder des AC-Rohrmotors (2) über eine zweite Leitung (9) angeschlossen wird. Es ist eine Steuereinheit (7) mit einen Schalter für die Ansteuerung der Laufrichtung vorgesehen, wobei die Steuereinheit aus der Phasenverschiebung zwischen den gemessenen Spannungen an der ersten und an der zweiten Leitung während einer kurzzeitigen Test-Einschaltperiode die von außen gewählte Laufrichtung ermittelt und das Starten des AC-Jalousiemotor oder der AC-Rohrmotor (2) verhindert, wenn sich der Motor in der Endposition bezüglich der ermitteften Laufrichtung befindet. Die Steueranordnung sorgt für ein sicheres Abschalten an den Endpositionen ohne zusätzliche mechanische Endschalter und benötigt nur wenige Bauteile. Ein kostengünstiger und dennoch zuverlässiger Betrieb des AC-Jalousiemotors oder des AC-Rohrmotors (2) ist gewährleistet.

## Beschreibung

### Stand der Technik

Die Erfindung betrifft eine Steueranordnung eines AC-Jalousiemotors oder eines AC-Rohrmotors mit elektronischer Endabschaltung, wobei eine Laufrichtung von außen vorgegeben wird, indem eine Wechselspannung entweder an eine erste Wicklung des AC-Jalousiemotors oder des AC-Rohrmotors über eine erste Leitung oder an eine zweite Wicklung des AC-Jalousiemotors oder des AC-Rohrmotors über eine zweite Leitung angeschlossen wird.

Es sind Wechselstrommotoren für Jalousie-, Raffstore-, Rolladenantriebe oder dergleichen, bekannt, bei denen die elektronische Endabschaltung des Motors bei noch anliegender Netzspannung über Relais oder Triacs gesteuert wird.

Hierbei ist für jede der zwei Laufrichtungen des AC-Jalousiemotors eine Leitung und ein Triac oder ein Relais vorgesehen, so dass je nach Laufrichtung eine an einer Leitung anliegende Spannung an den AC-Jalousiemotor durchgeschaltet werden kann. Die Triacs bzw. Relais werden von einer Steuereinrichtung angesteuert. Befindet sich der AC-Jalousiemotor in einer Laufrichtung in einer Endposition, so wird der entsprechende Triac bei Auswahl dieser Laufrichtung durch einen Benutzer dennoch nicht gezündet. Der AC-Jalousiemotor wird also nicht eingeschaltet. In einer oberen oder unteren Endstellung ist durch eine Endabschaltung zusätzlich geregelt, dass die Abtriebswelle des Motors nicht weiter in diese Richtung gedreht werden kann.

### Aufgabe der Erfindung

Aufgabe der Erfindung ist es, eine Steueranordnung zu schaffen, die für ein sicheres Abschalten an den Endpositionen ohne zusätzliche mechanische Endschalter sorgt und weniger Bauelemente benötigt, so dass ein kostengünstiger und dennoch zuverlässiger Betrieb des AC-Jalousiemotors oder des AC-Rohrmotors gewährleistet ist.

### Gegenstand der Erfindung

Gelöst wird diese Aufgabe durch eine Steueranordnung der eingangs genannten Art, bei welcher eine Steuereinheit mit einem Schalter für die Ansteuerung der Laufrichtung vorgesehen ist, wobei die Steuereinheit aus der Phasenverschiebung zwischen den gemessenen Spannungen an der ersten und an der zweiten Leitung während einer kurzzeitigen Test-Einschaltperiode die von außen gewählte Laufrichtung ermittelt und das Starten des AC-Jalousiemotor oder der AC-Rohrmotor verhindert, wenn sich der Motor in der Endposition bezüglich der ermittelten Laufrichtung befindet. Anstelle zweier Triacs oder Relais nach der Lehre des Stands der Technik benötigt diese Steueranordnung lediglich einen Triac zum Ein- oder Ausschalten des AC-Jalousiemotors oder des AC-Rohrmotors. Der Schalter kann durch einen Triac oder einen Leistungstransistor ausgebildet sein.

Zum Einschalten des AC-Jalousiemotors oder des AC-Rohrmotors muss eine der beiden Leitungen (z.B. diejenige für "Auf") an eine Wechselspannung angeschlossen werden. Dies geschieht vorzugsweise mit einem Jalousieschalter. Bei dauerhafter Zündung des Triac dreht sich der AC-Jalousiemotor oder der AC-Rohrmotor in diesem Fall in die Auf-Richtung. Befindet sich der AC-Jalousiemotor oder der AC-Rohrmotor in der oberen Endposition, darf er nicht gestartet werden, da sonst die Endposition überschritten wird. Es ist demnach wichtig zu erkennen, an welche der zwei möglichen Netzleitungen ("Auf" oder "Ab") die Wechselspannung angeschlossen wurde, ohne den Motor zu starten. Dieses ist im Ruhezustand nicht möglich, da die zwei Leitungen über die Wicklungen und den Motorkondensator miteinander verbunden sind. Um dieses Problem zu umgehen, besitzt die Steuerung erfindungsgemäß Mittel zur Erkennung der Phasenverschiebung zwischen den beiden Leitungen. Erfindungsgemäß wird der Triac so gezündet, dass ein kurzer energiearmer Impuls zum Motor geht, der noch nicht zur Erzeugung einer Drehbewegung ausreicht, jedoch anhand der Impuls-Phasenverschiebung zwischen der Wechselspannungsleitung und an der zweiten Leitung die Drehrichtung erkannt wird. Das Zünden des Triac kann damit je nach erreichter Endposition verhindert werden.

Vorteilhaft ist weiterhin, wenn eine Motorbremse, vorzugsweise eine Induktionsbremse, mit möglichst genau bestimmbarer, sich beim Öffnen ergebender Verzögerungszeit vorgesehen ist, die länger ist als der durch den Zündimpuls des Triacs ausgelöste Stromimpuls. In diesem Fall wird sicher gestellt, dass es nicht zu einer Drehbewegung des Motors kommt. Soll eine Drehung des AC-Jalousiemotors unterbleiben, da sich die Jalousie in einer Endposition befindet, kann die Entscheidung, den AC-Jalousiemotor nicht anzuschalten, getroffen werden, ehe der AC-Jalousiemotor sich bewegt. Die Reaktionszeit beispielsweise einer Induktionsbremse wird dabei vorteilhaft ausgenutzt. Dadurch wird sicher gestellt, dass der Stromimpuls so kurz ist, dass die Motorbremse nicht öffnet, aber so lang, dass sich eine Phasenverschiebung einstellt. Der Stromimpuls ist typischerweise zwischen 1ms und 3ms lang, höchstens aber so lange wie die Dauer einer Halbwelle der Wechselspannung.

Wenn die Steuereinheit Mittel zur Erzeugung des Zündimpulses zum Zünden des Triacs kurz vor Ende einer Halbwelle der Wechselspannung aufweist, wird zusätzlich sichergestellt, dass der Triac nur kurzzeitig gezündet wird, um eine Drehbewegung des Motors zu vermeiden. Eine Phasenverschiebung lässt sich besonders einfach durch diesen Stromimpuls erzeugen. Fließt ein Strom kurzzeitig durch den Motor, so stellt sich aufgrund der Wicklungen und des Motor-Kondensators eine vorübergehende Phasenverschiebung zwischen den an den Wicklungen anliegenden Wechselspannungen ein.

Vorteilhafterweise wird der Stromimpuls durch einmaliges Zünden des zwischen AC-Jalousiemotor und Nullleiter angeordneten Triacs erzeugt. Wird der Triac gezündet, so wird die Leitung, an der die Netzspannung anliegt mit dem Nullleiter kurzgeschlossen, so dass ein Strom durch den AC-Jalousiemotor fließen kann, was zu einer Phasenverschiebung führt. Die Phasenverschiebung kann also ohne zusätzliche Bauelemente erzeugt werden.

Die erfindungsgemäße Steuerung benötigt keine zusätzliche Leitung für die Spannungsversorgung der Steuerung oder der Wicklungen. Die Spannungsversorgung erfolgt ausschließlich über die erste oder die zweite Leitung zur Ansteuerung der Wicklungen. Hierdurch ist es möglich, den Motor gegen einen handelsüblichen AC-Motor mit mechanischer Endabschaltung auszutauschen. Weiter kann der Motor an jeden handelsüblichen Jalousieschalter angeschlossen werden, mit dem Vorteil, dass der Motor bzw. die Steuerung im Ruhezustand keine Leistung verbraucht.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

### Zeichnung

Ein Ausführungsbeispiel einer erfindungsgemäßen Steueranordnung ist in der Zeichnung dargestellt und wird in der nachfolgenden Beschreibung erläutert. Es zeigt:
- **Fig. 1**: eine schematische schaltungstechnische Darstellung der erfindungsgemäßen Steueranordnung; und
- **Fig. 2**: eine durch einen Zündimpuls herbeigeführte Phasenverschiebung.

### Beschreibung des Ausführungsbeispiels der Erfindung

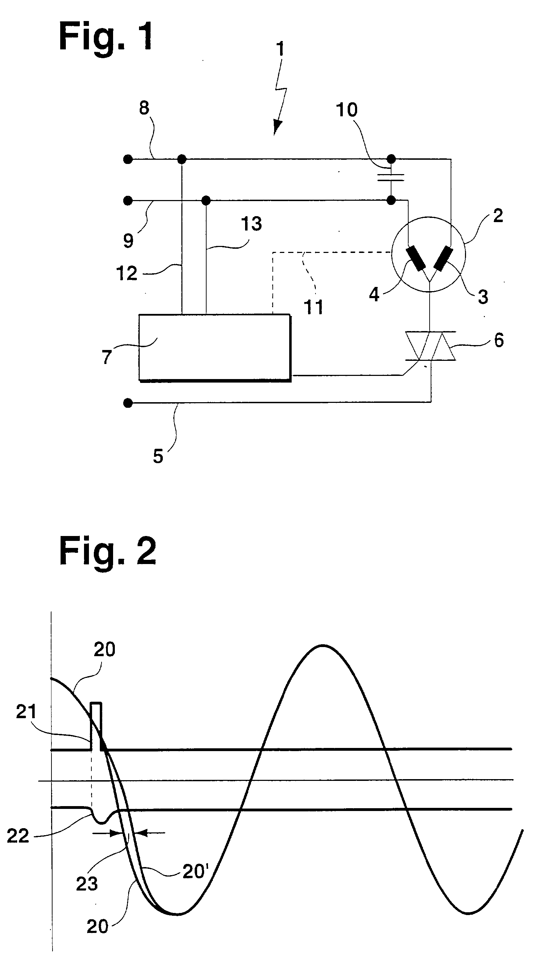

**Fig. 1** zeigt eine Steueranordnung **1** für einen AC-Jalousiemotor **2** mit Induktionsbremse. Der AC-Jalousiemotor 2 weist eine erste **3** und eine zweite **4** Wicklung auf. Zwischen dem AC-Jalousiemotor 2 und einem Nullleiter **5** ist ein Triac **6** angeordnet, der durch eine Steuereinheit **7** gezündet wird. Wird die erste Wicklung 3 des AC-Jalousiemotors 2 über eine erste Leitung **8** mit einer Wechselspannung verbunden, so erfolgt bei Zünden des Triacs 6 eine Drehung des AC-Jalousiemotors 2 in eine erste Laufrichtung. Wird dagegen die zweite Wicklung 4 des AC-Jalousiemotors 2 über eine zweite Leitung **9** mit einer Wechselspannung verbunden, so erfolgt bei Zünden des Triacs 6 eine Drehung des AC-Jalousiemotors 2 in eine zweite, entgegengesetzte Laufrichtung. Zwischen den Leitungen 8,9 ist der Motor-Kondensator **10** vorgesehen. Die Leitungen 8,9 stehen über den Motor-Kondensator 10 und die Wicklungen 3,4 miteinander in Verbindung. Die mit **11** bezeichnete gestrichelte Linie deutet an, dass die Steuereinheit 7 erkennen kann, in welcher Position sich der AC-Jalousiemotor 2 befindet, insbesondere bei einem Jalousiemotor erkennt die Steuereinheit, ob sich die Jalousie oder der Rolladen in einer oberen oder unteren Position befindet (elektronische Endabschaltung). Die Steuereinheit 7 weist weiterhin Verbindungen **12,13** zu den Leitungen 8,9 auf, um eine Phasenverschiebung der jeweils an den beiden Leitungen 8,9 anliegenden Wechselspannung feststellen zu können.

**Fig. 2** dient der Erläuterung der Funktionsweise der in Fig. 1 beschriebenen Steueranordnung 1. Die jeweils an den Leitungen 8,9 anliegende Wechselspannung (Netzspannung) ist mit dem Bezugszeichen **20** bezeichnet. Wird von einem Benutzer ein Schalter für eine Drehung des AC-Jalousiemotors 2 in eine erste oder zweite Laufrichtung betätigt, so wird die Netzspannung entsprechend an die erste 8 oder zweite Leitung 9 angelegt. Die Leitungen 8,9 stehen aber über die Wicklungen 3,4 und den Motor-Kondensator 10 miteinander in Verbindung, so dass an der Leitung, an welche die Netzspannung nicht angelegt wurde, auch eine Wechselspannung detektierbar ist. Die Steuereinheit 7 weiß daher zunächst nicht, in welche Richtung der AC-Jalousiemotor bei Zünden des Triacs 6 laufen wird. Deshalb wird dem Triac 6 nur ein einziger Zündimpuls **21** gegeben. Das Zünden des Triacs 6 bewirkt einen Stromimpuls **22**, der kürzer ist als die Zeit, die zum Lösen der Induktionsbremse des AC-Jalousiemotors 2 notwendig ist. Dieser Stromimpuls 22 bewirkt aber eine kurzfristige Phasenverschiebung **23** der an den Leitungen 8,9 anliegenden Wechselspannungen. Dabei ist in der Figur beispielhaft die an der ersten Wicklung anliegende Wechselspannung mit der Bezugsziffer 20 bezeichnet, während die an der zweiten Wicklung anliegende Wechselspannung mit der Bezugsziffer 20 'bezeichnet ist. Diese Phasenverschiebung 23 wird von der Steuereinheit 7 erkannt und daraus wird bestimmt, in welche Richtung der AC-Jalousiemotor 2 bei ständigem Zünden des Triacs 6 laufen wird. Ist der AC-Jalousiemotor 2 allerdings in einer Endposition einer Laufrichtung und wird diese Laufrichtung von einem Benutzer ausgewählt, so wird der Triac 6 nicht ständig gezündet. Der AC-Jalousiemotor 2 wird daher nicht eingeschaltet.

### BEZUGSZEICHENLISTE

- 1: Motorsteuerung
- 2: AC-Jalousiemotor
- 3: erste Wicklung
- 4: zweite Wicklung
- 5: Nullleiter
- 6: Triac
- 7: Steuereinheit
- 8: erste Leitung
- 9: zweite Leitung
- 10: Motor-Kondensator
- 11: Linie
- 12: Verbindung
- 13: Verbindung

- 20: Wechselspannung
- 20': Wechselspannung
- 21: Zündimpuls
- 22: Stromimpuls
- 23: Phasenverschiebung

## Patentansprüche

1. Steueranordnung (1) eines AC-Jalousiemotors oder eines AC-Rohrmotors (2) mit elektronischer Endabschaltung, wobei eine Laufrichtung von außen vorgegeben wird, indem eine Wechselspannung entweder an eine erste Wicklung (3) des AC-Jalousiemotors oder des AC-Rohrmotors (2) über eine erste Leitung (8) oder an eine zweite Wicklung (4) des AC-Jalousiemotors oder des AC-Rohrmotors (2) über eine zweite Leitung (9) angeschlossen wird, **dadurch gekennzeichnet, dass** eine Steuereinheit (7) mit einem Schalter für die Ansteuerung der Laufrichtung vorgesehen ist, wobei die Steuereinheit aus der Phasenverschiebung zwischen den gemessenen Spannungen an der ersten und an der zweiten Leitung während einer kurzzeitigen Test-Einschaltperiode die von außen gewählte Laufrichtung ermittelt und das Starten des AC-Jalousiemotor oder der AC-Rohrmotor (2) verhindert, wenn sich der Motor in der Endposition bezüglich der ermittelten Laufrichtung befindet.

2. Steueranordnung nach Anspruch 1, **dadurch gekennzeichnet, dass** der Schalter durch einen Triac (6) oder einen Leistungstransistor ausgebildet ist.

3. Steueranordnung nach Anspruch 1 oder 2, **dadurch gekennzeichnet, dass** der Schalter zwischen dem AC-Jalousiemotors oder dem AC-Rohrmotors (2) und dem Nullleiter angeordnet ist.

4. Steueranordnung nach Anspruch 2 oder 3, **dadurch gekennzeichnet, dass** die Test-Einschaltperiode so kurz ist, dass der AC-Jalousiemotor oder der AC-Rohrmotor (2) sich nicht dreht, aber ausreichend lang ist, um eine Phasenverschiebung sicher messen zu können.

5. Steueranordnung nach Anspruch 4, **dadurch gekennzeichnet, dass** eine Motorbremse, vorzugsweise eine Induktionsbremse, mit möglichst genau bestimmbarer, sich beim Öffnen ergebender Verzögerungszeit vorgesehen ist, deren Verzögerung länger ist als die Impulsdauer der Test-Einschaltperiode.

6. Steueranordnung nach Anspruch 4 oder 5, **dadurch gekennzeichnet, dass** die Steuereinheit (7) Mittel zur Erzeugung des Zündimpulses zur Zündung des Triacs (6) kurz vor Ende einer Halbwelle der Wechselspannung (20) aufweist.

7. Steueranordnung nach einem der vorhergehenden Ansprüche, **dadurch gekennzeichnet, dass** die Spannungsversorgung der Steuereinheit (7) über die erste oder die zweite Leitung (8, 9) erfolgt.
